# EUROPEAN PATENT APPLICATION

(11) **EP 2 808 649 A1**
(43) Date of publication of application: **03.12.2014**
(21) Application number: 13275127.2
(22) Date of filing: 29.05.2013
(51) Int. Cl.: G01C 21/20

(54) **Structure navigation**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A system and method of navigating through a structure includes receiving data representing a map of a structure (200), the structure map data including a plurality of locations and routes (303) between at least some of the locations, and receiving (602) data representing a user selection of one of the locations of the structure map. The method receives (602) location marker information from a location marker positioned in or on the structure and uses (604) the received location marker information to locate a current location of the user device within the structure map. The method further uses (606) the structure map data to generate navigation data for navigating from the current position to the selected location.

## Description

The present invention relates to navigating through structures.

Navigation systems for guiding vehicles or persons from one location to another are known. The most common are generally for use in an outdoor environment and rely on satellite, e.g. GPS, signals to locate the navigation system and guide it to a destination location. However, there are situations where satellite signals are not available, unreliable or not sufficiently accurate; for example, when navigating inside a structure. In such cases, the satellite signal may be physically blocked or deteriorated by materials forming the structure, e.g. steel or concrete walls and ceilings. Also, the resolution of a satellite navigation system may not be sufficient for guiding inside the structure. Further, parts of the structure, e.g. walls, can mean that navigation based on satellite signals alone, without internal knowledge of the structure, can be rendered useless. In other cases, certain locations within a structure may not be available at certain times of the day; may be temporarily inaccessible, e.g. due to repair work; may only be accessible to certain people for security reasons and the like, or may be changed from time to time (e.g. doors being locked or temporary walls/barriers being put in place). It can be difficult to routinely update conventional navigation systems in such circumstances.

A large vessel is an example of a structure through which it may be desirable to provide assistance with navigation. For instance, the Queen Elizabeth Class Aircraft Carrier (QEC) is particularly large with over 3000 compartments spread across 18 decks. The sheer size of the structure presents a challenge for those who need to find their way around, in particular those who are unfamiliar with the vessel's layout or compartment numbering system.

A known solution is to distribute deck plans amongst all personnel required on board. These make use of indicators around the vessels structure to identify their current location and the deck plan is then used to plan a route to the destination. However, whilst this solution is workable, it can be slow and is prone to operator error. It may also not always be up-to-date in terms of accessible locations.

Embodiments of the present invention are intended to address at least some of the problems discussed above. Embodiments of the present invention can provide a more efficient method of navigation for integration engineers on board large platforms. Embodiments of the system can use existing portable computing devices and may be integrated into/onto a structure, such as the QEC platform.

According to a first aspect of the present invention there is provided a (computer-implemented) method of navigating through a structure, the method including or comprising:
receiving data representing a map of a structure, the structure map data including a plurality of locations and routes between at least some of the locations;
receiving data representing a user selection of one of the locations of the structure map;
receiving location marker information from a location marker positioned in or on the structure;
using the received location marker information to locate a current location of the user device within the structure map, and
using the structure map to generate navigation data for navigating from the current position to the selected location.

The structure map data may be comprise an undirected graph, wherein vertices of the graph represent the locations and edges of the graph represent the routes (paths between vertices). The step of using the structure map to generate the navigation data can include using a route finding algorithm, such as a shortest path algorithm, e.g. Dijkstra's algorithm.

The structure map may denote restricted access to a said location or a said route. In some embodiments, weightings may be applied to the edges and a higher weighting may be applied to a said edge representing a restricted route.

In some embodiments, the structure may comprise a vessel, such as a ship or aircraft carrier, and the locations comprise compartments of the vessel. In some embodiments, may the method includes offering a user an option to select a dry route that only includes internal said routes and/or said locations of the vessel.

The method may further comprise displaying a graphical representation of the generated route. The graphical representation of the generated route may be overlaid on an image of at least part of the structure.

According to other aspects of the present invention there are provided computer program elements comprising: computer code means to make the computer execute methods substantially as described herein. The element may comprise a computer program product.

According to other aspects of the present invention there is provided apparatus including a processor configured to execute methods substantially as described herein.

According to another aspect of the present invention there is provided a portable user device including:
a data store having a map of a structure, the structure map data including a plurality of locations and routes between at least some of the locations;
a user interface configured to, in use, allow a user to select one of the locations of the structure map data;
a device for, in use, receiving location marker information from a location marker positioned in or on the structure;
a processor configured to:
   use the received location marker information to locate a current location of the user device within the structure map, and
   use the structure map data to generate data for navigating from the current position to the selected location.

The device for receiving location marker information may comprise a visual device, such as an image or video camera. The location marker information may comprise a visual code, such as a QR code.

According to another aspect of the present invention there is provided a computing device configured to generate the structure map data and transfer it to a portable user device substantially as described herein.

According to yet another aspect of the present invention there is provided (a structure including) location markers for use with a system substantially as described herein.

According to yet another aspect of the present invention there is provided a method of creating structure map data substantially as described herein.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments.

Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described, reference being made to the accompanying drawings in which:
Figure 1 is a schematic diagram showing components of an example navigation system;
Figure 2 is a schematic drawing of a deck of an example structure;
Figure 3 is a graphical representation of a graph corresponding to the deck;
Figure 4 is an entity relationship diagram of an example data structure used by the system;
Figure 5 is structural diagram of an example user interface of the system, and
Figure 6 is a flowchart illustrating steps that can be performed by the example system.

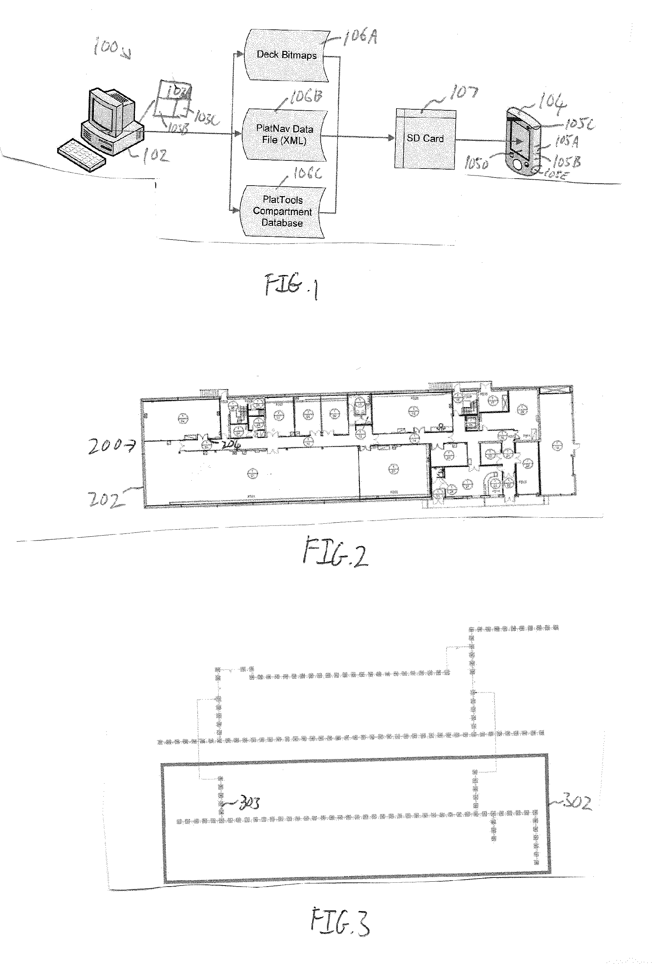

Referring to Figure 1, it will be seen that the example structure navigation system 100 includes a base station component 102 and at least one portable/mobile user device 104. Although only one user device is shown in the Figure, it will be understood that any reasonable number of user devices (which need not all be identical) can be configured, as described below, for use with the system. Further, it will be appreciated that the illustrated system of Figure 1 is exemplary only and in other embodiments some of the components (and/or their functions) may be integrated into single elements or distributed over two or more elements. Further, some could be omitted and/or at least one further component could be added.

The base station component 102 can comprise a computing device, such as a desktop computer running Windows XP^{™} or higher. It will normally include a processor 103A and memory 103B configured to run an application 103C that is intended to author and/or synchronise data files for use on the user devices 104. In some embodiments, the base station component can include, or be in communication with, a docking station (not shown) in order to synchronise the map data with the mobile devices. In addition, several charging stations (not shown) for the mobile devices can be provided.

The at least one portable/mobile user device 104 can comprise any suitable portable/mobile device that includes a processor 105A and memory 105B. The mobile device can include, or interface with, an imaging device, such as a video or still camera 105C, as well as a user interface 105D. Typically, the mobile device will include a display/screen of up to around 13 cm (5 inches) in size. The mobile device can be powered by an on-board battery or a USB Charger. In some embodiments, the user device can comprise a Samsung Galaxy WiFi 5.0™. This is an Android™ device similar to a smart phone, but which cannot accept a SIM Card. Thus, the mobile device may not have a SIM card or connectivity to wireless communications, e.g. 3G/4G, networks. The mobile device may be Wi-Fi enabled, but this can be disabled, e.g. using the known "AppLock" application. Embodiments of the system can avoid requiring access to external data, e.g. via a communications network, and rely solely on data stored on board the mobile device for generating navigation data. The "AppLock" application, or other means, can ensure that only authorised applications can be run on the device unless a password is provided. Other security measures, e.g. encrypting the data on the device and requiring a signed conditions of use (SyOp's) document, can also be used.

To prevent theft, when checking out a mobile device 104, a register can be filled in, detailing who is to use the mobile device. Due to the portable nature of the system components, a safety statement may be provided and any personnel using it may have to read and agree to the safety statement. For security reasons, the mobile devices may be stored in a strong room with restricted access, e.g. one enforced by a PAC (access control) system. In embodiments where the system is used with a secure structure, the system may not store any data with a particular security classification. As embodiments of the system only interface with the base station component application they will have no effect on the classifications of other systems.

The user interface for the base station 102 application can provide a means for a user to import a map file representing at least part of a structure for use with the mobile devices 104. The map can include several locations within the structure and routes between at least some of the locations. In some cases, the routes may be changeable or restricted, e.g. only certain personnel are allowed to pass through secure locations, or locations where work is being carried out. In the example described below, the structure comprises a vessel having several decks, each deck having several compartments and, optionally, other features, such as stairs, exits, entrances, toilets and the like. It will be understood that the system can be used to help with navigating around other types of structures, e.g. permanent or temporary buildings, storage facilities or even vehicles/trailers, which may be sub-divided into different parts (e.g. levels, decks, wings, etc) and have different types of features.

In some embodiments, the data received by the application 103C may initially include location and route data, but in other cases the user may be required to generate or at least add/update the route data. For instance, in some cases, having imported bitmap data 106A representing the structure, the interface of the application 103C may allow a user to draw lines over valid routes using a mouse. Upon releasing the mouse after drawing, the application can produce vertices at set intervals. In this fashion the user can effectively draw a graph over the top of the bitmap. Having drawn a selection of nodes over the top of the deck bitmap, the user can then select nodes/locations and specify which compartments (for a vessel - other types of features could be identified for other structures) are present at these locations. In addition, some nodes can be specified as stair nodes so they can be linked to other decks.

Embodiments of the base station component 102 application 103C can produce and store the following data: how the graph vertices map to positions on the deck bitmaps; the graph data structure, and a compartment database. The base station application can reload these items from a file in order modify an existing map. The example data files shown in Figure 1 have the following purposes:
- Deck Bitmaps 106A - Image file for each of the decks, based on vessel documentation
- Plat-Nav Data File 106B - XML file detailing the structure of the underlying map data for the entire vessel
- Plat-Tools Compartment Database 106C - SQLITE database containing compartment location data

Embodiments of the base station component 102 application 103C can validate routes to ensure all compartments are accessible and provide notifications if any are inaccessible. In the illustrated embodiment, the base station 102 application 103C can support the synchronisation of the data files relating to the maps of the structure on the at least one mobile device 104. This can be done by means of updating the files on removable memory medium, such as SD card 107, by the base station component and then transferring the card to one of the mobile devices. However, it will be appreciated that the data can be transferred by other means, e.g. a wired (such as a USB cable) or wireless communications channel. It will also be appreciated that the arrangement of data shown is exemplary only and in general any suitable data structures/formats can be used.

Figures 2 and 3 show how the layout of the structure relates to the graph representing it in the map data. The boxed area 302 on Figure 3 is Deck 1 of the example vessel and matches up to the area 202 of Figure 2. It should be noted that the orientation and positioning of graph elements is irrelevant, this is done in Figure 3 for ease of reading. In some embodiments, the graph data is exported in an XML format and makes up part of the data files used by the mobile device 104.

In embodiments of the navigation system, an application 105E executing on the mobile device(s) 104 require locations within the structure to be determined by interrogating location markers. In some embodiments, these markers are visual in nature, e.g. barcodes or, preferably, QR codes, and can be applied to a wall or other part of the location using any suitable method, e.g. stickers, print, etc. QR Codes can be placed on the entry point to every compartment on the structure and, in some cases, also on the towers surrounding the platform. The string below the QR code shows the string encoded into the QR code. It can be a comma separated list, the following list describes each element:
i) Application Target (platnav) - Ensures the QR code contains navigation system data.
ii) Platform Target - Denotes the platform represented by the current QR code
iii) Compartment Code (1-12) - Denotes the compartment code represented by the current QR code
iv) Entry Point Name (a) - Denotes the entry point to the compartment.

In alternative embodiments, non-visual markers can be used, e.g. RF devices that emit a coded signal when scanned, the signal being used to identify the location.

In the detailed embodiment, a routine for decoding QR codes is required by the application 105E. A known open source application called "ZXing" ("Zebra Crossing") is suitable, which provides a 1D/2D Java™-implemented image processing library. "ZXing" is implemented into embodiments of the navigation system by making used of its Intent Integrator functionality. This requires the installation of a standalone application "Barcode Scanner", which is based on "ZXing". When the navigation system requires a QR code to be decoded, context is passed momentarily to the "Barcode Scanner" application, the code is scanned and the result returned to the calling application. The benefit of this approach is that the source code for decoding QR codes is entirely decoupled from the navigation system.

The map data stored on the mobile devices 104 can be queried for route calculations by the application 105E. The map data generated by the base station component 102 application 103C may be further processed and reformatted by the mobile device application and can include not only the paths through the vessel, but also the access points (towers). The mobile device application can provide scope to select an initial point, e.g. a building number 102, as a start point and calculate a route through the relevant tower for access to the destination compartment. Once on board the platform/structure the mobile device application should not take a user off the platform unless necessary.

In some embodiments, the map of the structure is represented as an undirected graph by the data used by the application 105E. However, it will be appreciated that other representations of features of the map can be used. Vertices can be placed at regular intervals across the deck. These nodes are joined using edges, thus creating pathways through the structure. Compartments can then be linked to specific graph vertices to allow compartment-to-compartment navigation. Weightings can be applied to each of the edges. This allows certain routes to be designated as preferable, or faster, than others. This weighting can also be used to block certain routes; in this case, the edge where the blockage occurs is given an extremely high weighting, making that particular route exceptionally long/non-preferred so that an alternative should be found. In some embodiments, the route calculation is performed using a known shortest path algorithm called Dijkstra's algorithm, although it will be understood that other route calculation algorithms (not necessarily shortest-part algorithms) can be used. In some cases, the user may be given the choice of the type of route to be found, e.g. shortest, quickest, avoiding certain features, such as stairs, where possible, etc. For an embodiment designed to assist with navigation about an aircraft carrier or the like, the application may allow the user to set a "Dry routes only" preference, which will avoid use of the flight deck where possible. In some cases, the "fastest" route will utilise main corridors and walkways wherever possible, but this may not be the shortest route (for example through compartments) and may therefore not be quickest route for personnel with extensive knowledge of the vessel layout. The graph is implemented on the device through the use of an external library, JGraphT (www.jgrapht.org). This library provides methods for creating and modifying the graph, as well as performing the route calculations.

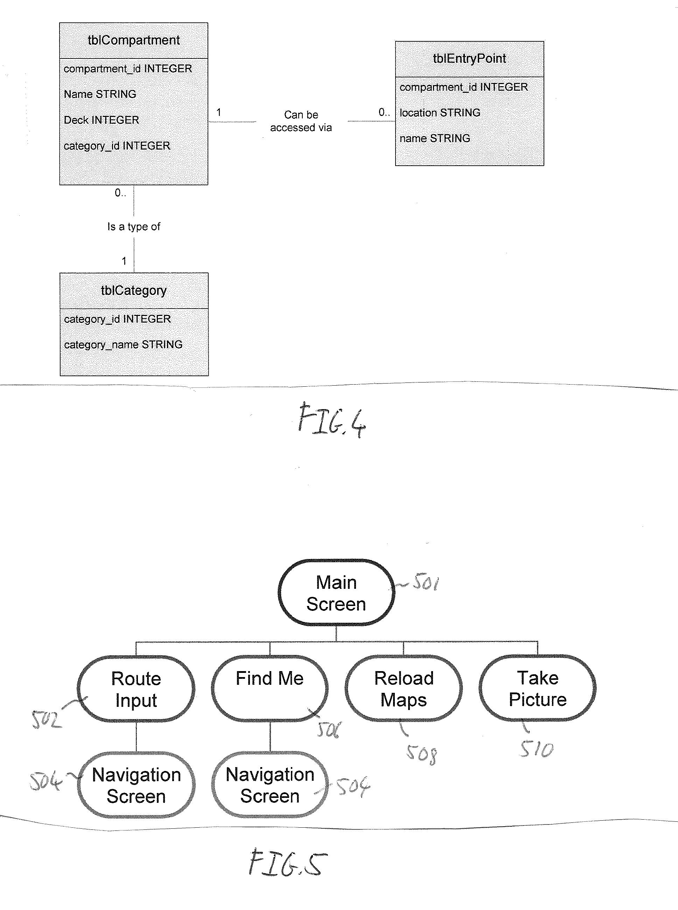

The Compartment Database 106C relates compartment codes to locations on the graph, as well as allowing each compartment to be assigned a category. The structure of an example database is shown in Figure 4. The database is intended to be queried easily. Android™ provides support for SQLITE databases and so this format is used in the detailed embodiment. The Entry Point table has been separated from the Compartment table as a single compartment can have multiple Entry Points (Doors/Access Points).

The mobile device 104 application 105E is configured to compute and display a route to a user. In some embodiments, the computed navigation data may be used to control/guide a vehicle or the like in a partly or wholly automatic manner to the selected destination location. Figure 5 shows an example user interface hierarchy of the application. Large buttons are preferably used throughout the interface to ensure ease of use; this is particularly relevant for touch screen-based interfaces. The example interface main screen 501 is a selection of buttons which direct the user to all of the features in the application.

The Route Input screen 502 allows the user to input a start location and a destination. The destination may be a platform compartment, or other feature, such as an emergency exit/muster point, toilet, mess area, etc, for a vessel. Some embodiments can allow the user to tag a destination as a 'Favourite', which will allow subsequent rapid selection of the required destination. EditText views (similar to a Windows™ TextBox) can be used to display the currently selected locations. When attempting to edit the contents of the EditText area, the keyboard is not displayed as expected, but a window opens allowing the user to select a compartment or a category to which to navigate. This screen can also provide a button allowing a user to scan a QR code and populate the current location with the result. Upon confirming the start point and the destination the user is taken to the Navigation screen 504 where the route is displayed, as will be described below.

The Find Me screen 506 allows a user to scan a valid QR code and then displays the result on the map. This allows a user to easily locate him/herself on the structure without having to start navigation. Upon a successful scan, the user is taken to the Navigation screen 504 where their location is displayed.

The Reload Maps button 508 starts the process of loading all of the mapping data from the XML files into memory. Before starting the process the user is warned that it could take some time. The optional Take Picture screen 510 can be used to save a camera image, for example.

The Navigation screen 504 is where the results of the route calculation or Find Me screen operation are displayed. There can be three further buttons on this screen allowing a user to change the current deck display either up a deck or down a deck, as well as being able to update their current position and force a route re-calculation if in navigation mode. Should the deck displayed be changed to one where the route does not cross then a notification will be displayed, informing the user that the route does not cross that deck.

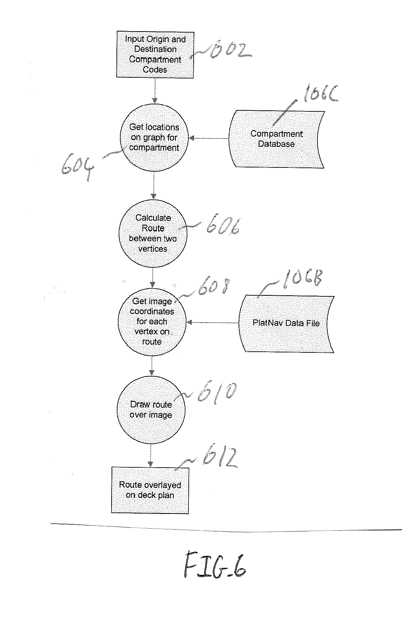

The flowchart of Figure 6 shows the process for computing and displaying a route to the user that can be performed by the mobile device 104 application 105E. The skilled person will appreciate that the steps shown are exemplary only and that in alternative embodiments, some of them may be omitted and/or re-ordered and in some cases additional steps can be included. It will also be appreciated that the process can be implemented using any suitable programming language and data structures.

At step 602 the route calculation process receives data representing the start/origin (typically current position of the user device) and destination locations. These can be obtained using the user interface described above. In some embodiments, all QR codes scanned during use of the mobile device 104 will be logged and can be made available to the application 103C on the base station component 102.

At step 604 the application 105E obtains locations on the graph for the selected locations, e.g. vessel compartments, by referring to data in the compartment database 106C. At step 606 the application 105E calculates a route between the origin and destination locations. In the detailed embodiment, this is done using the shortest path algorithm called Dijkstra's algorithm as described above.

At step 608 the application 105E obtains image coordinates for each vertex on the calculated route, which can involve referring to data in the XML data file 106B, and at steps 610 and 612 the calculated route between the two graph vertices is drawn as an overlay on top of the deck bitmap. For this, a mapping between each node on the graph and a co-ordinate on the deck bitmap may be required. This makes up part of the Plat-Nav data file 106B. Using this data, combined with the route, lines can be drawn over the top of the deck bitmap showing the correct route to take. Some embodiments can allow the user to update the current location at any time (forcing a route recalculation if required).

When a route requires the use of a staircase, a suitable icon is displayed where the user should use stairs. In some embodiments, the application can automatically switch the deck displayed following selection of a stairwell icon. Other icons may also be displayed, e.g. current location, destination, etc. In some embodiments, the application may further calculate (using known techniques) an estimated arrival time/journey duration and display an indication of this to the user.

For computational and storage efficiency issues, with large structures it may be necessary to scale down the bitmap, at a sacrifice of quality. Alternatively, tiling may be used as a method of displaying the bitmap. This can involve slicing the original image up into small sections and only loading the required tiles. Different resolution tiles can then be used for different zoom levels.

## Claims

1. A computer-implemented method of navigating through a structure, the method including:
receiving data representing a map of a structure (200), the structure map data including a plurality of locations and routes (303) between at least some of the locations;
receiving (602) data representing a user selection of one of the locations of the structure map;
receiving (602) location marker information from a location marker positioned in or on the structure;
using (604) the received location marker information to locate a current location of the user device within the structure map, and
using (606) the structure map data to generate navigation data for navigating from the current position to the selected location.

2. A method according to claim 1, wherein the structure map data comprises an undirected graph, wherein vertices of the graph represent the locations and edges of the graph represent the routes.

3. A method according to claim 2, wherein the step of using (606) the structure map data to generate the navigation data includes using a route finding algorithm.

4. A method according to claim 3, wherein the route finding algorithm comprises a shortest path algorithm, e.g. Dijkstra's algorithm.

5. A method according to any one of claims 2 to 4, wherein the structure map data denotes restricted access to a said location or a said route (303).

6. A method according to claim 5, wherein weightings are applied to the edges of the graph and a higher weighting is applied to a said edge representing a restricted route.

7. A method according to any one of the preceding claims, wherein the structure (200) comprises a vessel, such as a ship or aircraft carrier, and the locations comprise compartments of the vessel.

8. A method according to claim 7, wherein the method includes offering a user an option to select a dry route that only includes internal said routes and/or internal said locations of the vessel.

9. A method according to any one of the preceding claims, further including displaying a graphical representation of the generated route, the graphical representation of the generated route being overlaid on an image of at least part of the structure (200).

10. A computer program element comprising: computer code means to make the computer execute a method according to any one of the preceding claims.

11. Apparatus including a processor configured to execute a method according to any one of claims 1 to 9.

12. A portable user device (104) including:
a data store (105B) having a map of a structure (200), the structure map data including a plurality of locations and routes (303) between at least some of the locations;
a user interface (105D) configured to, in use, allow (602) a user to select one of the locations of the structure map data;
a device (105C) for, in use, receiving location marker information from a location marker positioned in or on the structure;
a processor (1 05A) configured to:
use (604) the received location marker information to locate a current location of the user device within the structure map, and
use (606) the structure map data to generate data for navigating from the current position to the selected location.

13. A device according to claim 12, wherein the device (105C) for receiving the location marker information comprises an image or video camera and the location marker information comprises a visual code.

14. A device according to claim 13, wherein the location marker information comprises a QR code.

15. A computing device (102) configured to generate structure map data and transfer the structure map data to a portable user device (104) according to claim 12 or 13.
